# EUROPEAN PATENT SPECIFICATION

(11) **EP 3 456 905 B1**
(45) Date of publication and mention of the grant of the patent: **21.06.2023**
(21) Application number: 17020429.1
(22) Date of filing: 19.09.2017
(51) Int. Cl.: E04H 15/44, E04H 15/58, E04H 15/36, C09D 5/16, C09D 183/00

(54) **TRANSPORTABLE HOUSING SYSTEM WITH ABILITY TO CAPTURE, COLLECT AND CONVERT ENVIROMENTAL MIST AND HUMIDITY INTO DRINKING WATER**
TRANSPORTABLE HÜLLENSYSTEM MIT FÄHIGKEIT ZUM ERFASSEN, SAMMELN UND UMWANDELN VON UMWELTNEBEL UND VON FEUCHTIGKEIT IN TRINKWASSER
SYSTÈME DE LOGEMENT TRANSPORTABLE AVEC CAPACITÉ DE CAPTURER, COLLECTER ET DE CONVERTIR UN BROUILLARD ENVIRONNEMENTAL ET DE L'HUMIDITÉ DANS DE L'EAU POTABLE

(43) Date of publication of application: 20.03.2019
(73) Proprietor: Universidade de Évora, 7000-803 Évora (PT)
(72) Inventor: de Castro Martins Secca Ruivo, Maria Inês, 7000-535 Évora (PT); Baltazar Santos Bailão da Silva, Cátia Sofia, 2660-327 Santo António dos Cavaleiros (PT)
(74) Representative: Pereira da Cruz, Joao

(56) References cited:
- EP-A1- 1 867 401
- EP-A2- 1 092 758
- WO-A1-93/23630
- CN-U- 206 477 673
- CN-U- 206 495 558
- US-A1- 2014 120 320
- "Digital 3D-Model of the twisted exhibition space", http://quicksilver.be.washington.edu/cours es/arch486x/sandbox/ , 30 March 2011 (2011-03-30), XP002780151, Retrieved from the Internet: URL:http://quicksilver.be.washington.edu/c ourses/arch486x/sandbox/WASET-Tent.jpg [retrieved on 2018-04-17]
- "Spiral Sukkah", , 31 December 2013 (2013-12-31), XP002780152, Retrieved from the Internet: URL:http://cargocollective.com/urbanworm/S piral-Sukkah [retrieved on 2018-04-17]

## Description

### Technical Domain of the Invention

The present invention relates to a transportable shelter system, for one or more persons, easily mountable and dismountable due its spiral base geometry, such as that of a conch, and to a rotatable mounting system with simple engagement of the poles assembly at the top of the tent.

Furthermore, the tent of the present invention further allows the collection, recovery and conversion of mist or environmental humidity into drinking water and its storage, transport and safe ingestion, in a phased manner, for example throughout the day, due to the incorporation of a new fabric with hydrophilic and hydrophobic properties and/or a water collection and storage system.

Thus, the present invention lays in the field of travel, camping articles and emergency housing, and may be used not only for leisure purposes but also to accommodate migrant populations, refugees or even for military, and other purposes where a shelter is required safe, stable, mobile and easy assembly and disassembly.

### Background of the Invention

Document KR20150011008 discloses a structure for installing a tent comprising a plurality of connecting pieces constituted by a horizontal connecting tubular device and a lateral connecting tubular device; a side frame comprised of a connecting structure and a first and second frame, wherein a locking piece is provided at both ends of the connecting structure; a support frame connected to the connecting structure of the tip between the connecting frames connected to the connecting pieces; a base frame connected to the support structure; and a lower attachment portion for securing each end of the side frame and the support structure. This tent is intended to be stable and easy to disassemble. However, it has a heavy structure and difficult transportation.

CN105275256 discloses an inflatable, moisture-resistant, easy-to-carry mobile tent that can be stowed in only one bag or package unlike the usual four cartons of the common tents. However, this tent is not stable after assembly and is used under very limited conditions.

WO9323630A1 discloses a construction assembly for a shelter comprising a plurality of upwardly and inwardly curved supporting members each engaged in its respective socket of a mounting assembly centrally positioned in the structure. Other documents also disclose shelter systems having routable mounting systems, such as CN206495558 disclosing a shelter system in the form of a spiral and CN206477673 disclosing a tent, aiming to achieve a better structural stability of the system.

The document "Digital 3D-Model of the twisted exhibition space" {http://quicksilver.be.washington.edu/courses/arch486x/sandbo x/] and the document "Spiral sukkah" [http://cargocollective.com/urbanworm/spiral-sukkah] disclose a tent in spiral format given by placing a set of sails in said spiral form, a work of art that intends to symbolize wilderness shelters that the Jewish people constructed in ancient times. Spiral Sukkah is a modern sukkah that addresses the essential nature of dwelling.

Document US2014120320 describes a material comprising a surface treated metal with a coating photocatalytic film and an organic-inorganic composite resin containing a siloxane bond and at least one group selected from the group consisting of an aryl group, a carboxyl group, an amino group, a hydroxyl group, and an alkyl group having 1 to 12 carbon atoms, said coated material has concaves on a surface thereof on the outermost layer side, an area of the outermost layer is 50% to 980 of an area of a surface of the metal when the coated material is seen in a plan view, and a surface area of the outermost layer is 101% to 5000% of the area of the surface of the metal.

The evolution of the study of hydrophobic and hydrophilic systems present in nature, through biomimetic methodological processes, has led to the invention of different materials and designs of micro- / nanostructured textures, the biological samples individually being more exploited in this context: Lotus leaf, butterfly wings or the beetle shell of Namibia.

The application of these innovations to fabrics has been accomplished through the design of textile weaves, the immersion of the fabric in water repellent solutions, or the application of materials to rough finishes that mimic the hydrophobic or hydrophilic systems of a given biological example.

CN106460239 discloses a synthetic polymer, for application to fabrics, which comprises silicone and exhibits improved dispersibility. The polymer comprises in its composition a 0.1% to 20% by weight amount of silicone and can be applied as an aqueous suspension in the formation of fabrics. This fabric lacks the hydrophobic or hydrophobic capabilities of the present invention.

KR20080112564 (A) discloses a method of producing a composite fibre for producing a fabric having hydrophobic properties by forming an oil emulsion comprising the steps of (i) mixing a sol-gel silicone based on a synthetic resin chip, and (ii) irradiating the blend. The final product comprises 0.1 to 10% by weight of silicone, preferably 1 to 5% and is applied to the fabric during its formation. It is a process for conferring fabrics impermeable properties, which uses less silicone than the present invention and does not exhibit the hydrophobic and hydrophilic properties of the present fabrics.

The present invention has as biomimetric reference the three cases (Lotus leaf, butterfly wing and beetle carapace of Namibia), resulting in a solution which, while enhancing the hydrophilic power of the fabric, combines it with a hydrophobic system and reduces the contact time of water with its surface by 600.

None of these documents disclose a transportable shelter system having a spiral geometric shape, comprising an outer awning and a rotatable mounting system, the outer awning comprising a film of a structured material with hydrophobic micro-drained structure and hydrophobic and hydrophilic properties, and having corrugated protuberances and drains with a "V" shape with surface walls presenting an angle of approximately 12° relative to the horizontal plane of the surface walls, and forms a web of corrugated protuberances, alternately with a contact angle with water greater than 90° and less than 90°, and the rotatable mounting system comprising a housing, a housing cover, pointers for guiding the insertion of foldable poles, a central tube, a pole engaging system having pole-engaging elements and a base, and a pole-frame, where each foldable pole has a semi-bearing upper end to fit the in pole engaging system.

The combination of these specific outer awning and rotatable mounting system with simple engagement of the poles assembly at the top of the tent, said tent having a spiral shape provides a shelter that seeks to solve the aforementioned problems of the prior art by providing a one-person or multi-person shelter system, easily mountable and disassembled, with great structural stability and that is transportable by a single person, with capturing capability and water storage.

### Summary of the Invention

The present invention relates to a one-person or multi-person shelter system, easily mountable and dismountable, with great structural stability and which is transportable by a single person.

The transportable shelter or tent of the present invention has a spiral base geometry, such as that of a conch, and comprises a rotatable mounting system with simple engagement of the poles at the top of the tent, as described in claim 1.

A further aspect of the invention relates to a hydrophilic and hydrophobic material that comprises composite material having a micro drained structure. When combining said composite material with the above mentioned transportable shelter, the recovery of water from the mist or environmental humidity is increased.

Another aspect relates to a device for collecting and converting mist or environmental humidity into drinking water, which can be coupled to the tent

In this way, the present invention provides a secure and stable shelter that is quick and easy to assemble and disassemble, allowing either an individual, small or large groups of people to be housed in an organized and comfortable manner, and also to provide drinkable water.

Laying in the field of travel and camping articles, the tent can be used not only for leisure purposes but also to accommodate migrant, refugees or even for military purposes and others, where a secure, stable, mobile and quick and easy assembly and disassembly are required.

In addition, due to its optional accessories and implementations, it can be used advantageously in a wide variety of weather and social conditions, including for emergency shelter having short to medium-term durations.

### Description of the Figures

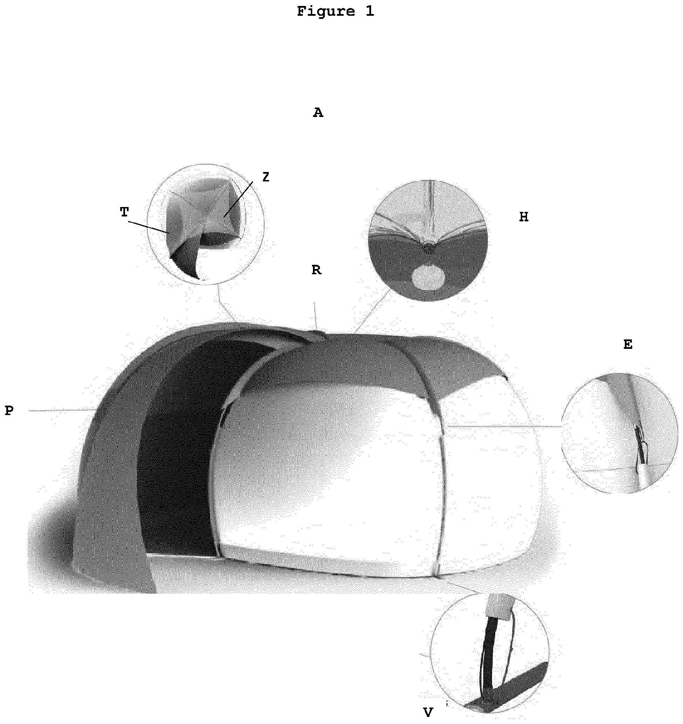

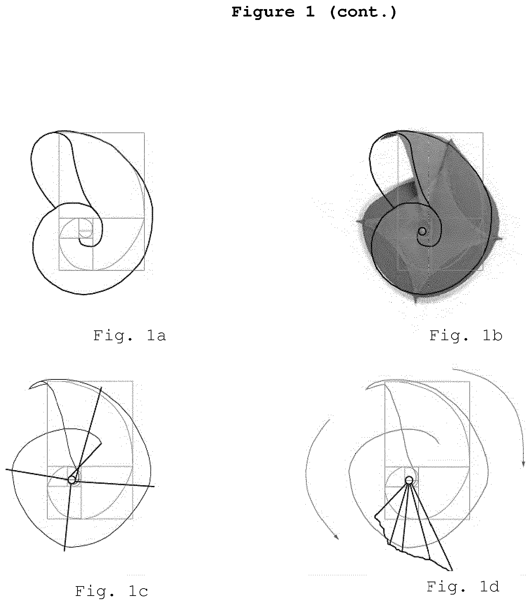

Fig. 1 - Illustration of an example of the transportable shelter system of the present invention, in particular of a tent, wherein;
   **A** represents the shelter system;
   **T** represents the cover or awning with a spiral shape. An extra sheet of fabrics (T') may be also provided as inner awning (not shown in the picture);
   **R** indicates the position of the rotatable mounting system inside the shelter (A);
   **H** represents the water purification system inside the shelter (A) ;
   **E** represents the frame fastener system between the folding poles and the cover of the shelter (A) to the ground;
   **V** represents a pole of the folding pole system positioned when the shelter (A) is assembled;
   **P** represents a handle for helping to open and close the shelter (A); and
   **Z** represents a flysheet, which is an additional awning or positioned on the outer awning (T); and
   **B** represents the ground sheet or the floor of the tent (A).
Fig. 1a to Fig. 1d - Illustration of the rotatable system (R) for mounting and disassembling of tent (A), where it is possible to see the similarity with the spiral of a conch and the development of the geometric format of the tent. For that purpose, the awning (T) and the foldable pole-frame (7) is provided with different dimensions according to the respective relevant part of the spiral shape of the tent.
Fig. 2 - Illustration of the disassembling and transport of tent (A), in particular of the set of folding poles (7) and respective engaging system (M), for the rotatable mounting system (R), positioned at the top of the disarmed tent (A), wherein:
   2a to 2c represent the folding of the poles (7) and tent (A); and
   2d represents a suitable bag for transporting the tent (A) disassembled and folded.
Fig. 3 - Illustration of an example of the rotatable mounting system (R) of the present invention, having semi-bearings, wherein:
   Fig. 3a represents the system (R) disassembled;
   Fig. 3b represents system (R) assembled, where it is possible to see the housing of the rotatable mounting system (R);
   Fig. 3c and 3d - Enlarged view and side view of one of the preferred aspects of the rotatable mounting system (R) with semi-bearings, wherein:
      1. Represents a removable cover;
      2. Represents the housing cover;
      3. Represents the guiding pointers;
      4. Represents the water-guiding tube;
      5. Represents a hole for fastening means (ex. screw);
      6. Represents internal securing means for funnel (F) (ex. inner screw thread);
      7. Represents the foldable pole frame (7) each pole (7') having a semi-bearing upper end;
      8. Represents the side fitting for a pole (7');
      9. Represents the inner fitting for a pole (7');
      10. Represents the base with fittings for inner parts;
      11. Represents securing means (ex. screws).

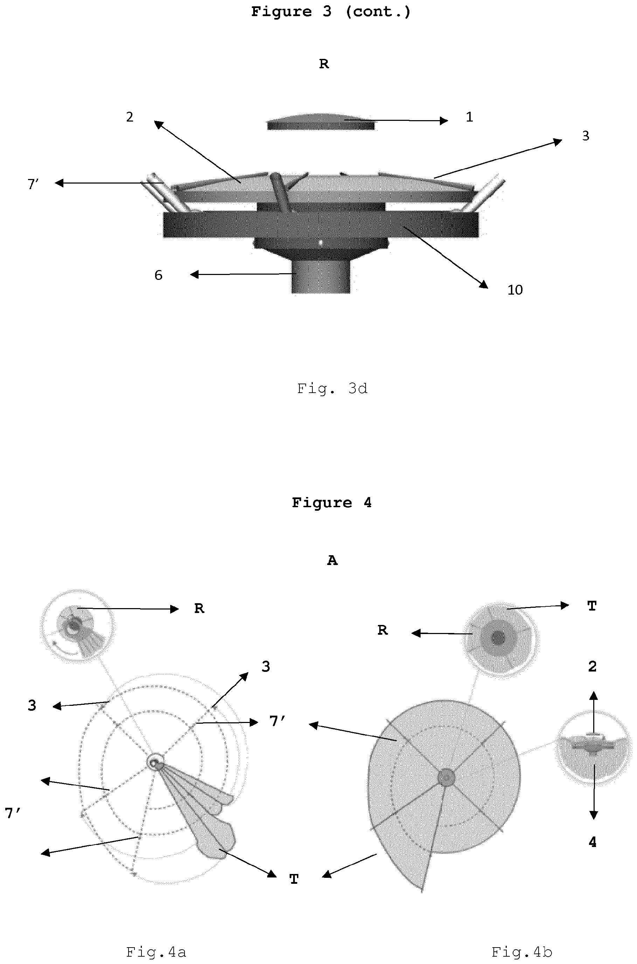

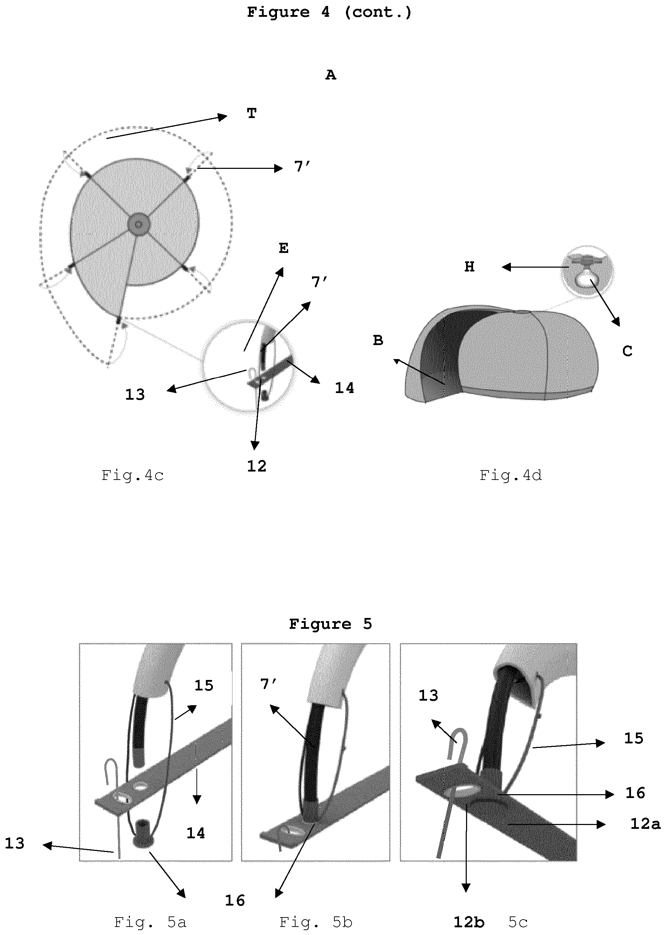

Fig. 4 - Illustration of assembling and disassembling of the pole-frame (7) of the tent or shelter (A), in another preferred aspect of the invention, wherein:
   Fig. 4a - Represents the rotation of the poles (7), for positioning aligned with the guiding pointers (3) of the rotatable mounting system (R), and fixing the fabric of the awning (T), preferably through the engagement of a rubber washer, to the top of the rotatable mounting system housing (2) ;
   Fig. 4b - Represents the alignment of the poles (7) with floor frame fasteners (E) (such as with nylon ribbons attached to the floor of the tent) and positioning the cover (1) in the hole of the water-guiding tube (4) positioned on the centre of the rotatable mounting system (R) - not shown in figure;
   Fig. 4c - Assembling of the tent (A) by pressing the poles (7) in the holes of the fastening means (E), which are nylon ribbons (14) in this example;
   Fig. 4d - Fixing the water recipient (C) of the water collection and purification system (H) to the lower end of the water-guide tube (4) of the rotatable mounting system (R) inside the tent (A), in this example, by locking system and thread.

   The dashed lines represent the outer awning of the tent (T), the poles (7) and the floor of the tent (B), when assembled and aligned with the guiding pointlers (3) of the rotatable mounting system (R).
Fig. 5 - Represents the attachment of the stakes (13) to a pole tip (7) and nylon ribbon (14) to the ground, in another preferred aspect of the present invention, wherein:
   Fig. 5a - Represents the positioning of a pole tip (7) and elastic bands (15) with coupled rubber shim (16) for securing the poles (7) relative to the nylon ribbons (14);
   Fig. 5b - Represents the engagement of the poles (7) into the first, smaller diameter hole (12a) of the nylon ribbon (14) and the engagement of the stakes (13) into the second, greater diameter hole (12b) of the nylon ribbon (14);
   Fig. 5c - Represents the engagement of the shims (16) on a pole tip (7) and placing the stakes (13) to the ground by pressure.

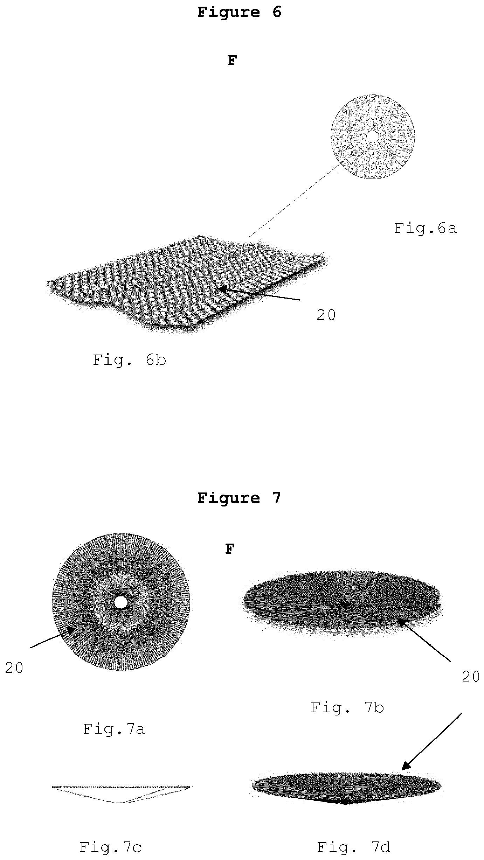

Fig. 6 - Represents a detail of the embossed structure of the funnel (F), in another preferred aspect of the invention, wherein:
   Fig. 6a - Represents the funnel (F) in a planar view; in the square marking there is an enlarged area in figure 6b, wherein (20) represents the drainage texture in "W" with hydrophobic and hydrophilic characteristics;
   Fig. 6b - Represents an enlarged area corresponding to the call line of the square, indicated in figure 6a, wherein (20) represents the drainage texture in "W" of hydrophobic and hydrophilic characteristics.
Fig. 7 - Represents the silicone-hydrophobic and hydrophilic funnel (F), in another preferred aspect of the invention, wherein:
   Fig. 7a - Represents a top view of planned silicone wafer with pattern printed on PDMS - polydimethylsiloxane polymer;
   Fig. 7b - Represents a configuration of the funnel by overlapping the ends of the silicone wafer cut;
   Fig. 7c - Represents a side view of the funnel (F) assembled;
   Fig. 7d - Represents another view of the funnel (F) assembled.

### Detailed Description of the Invention

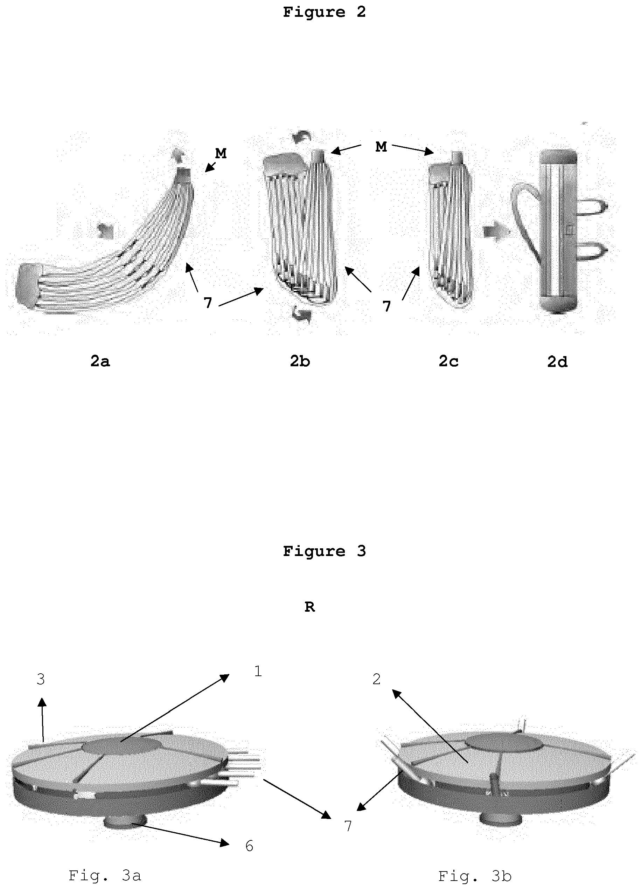

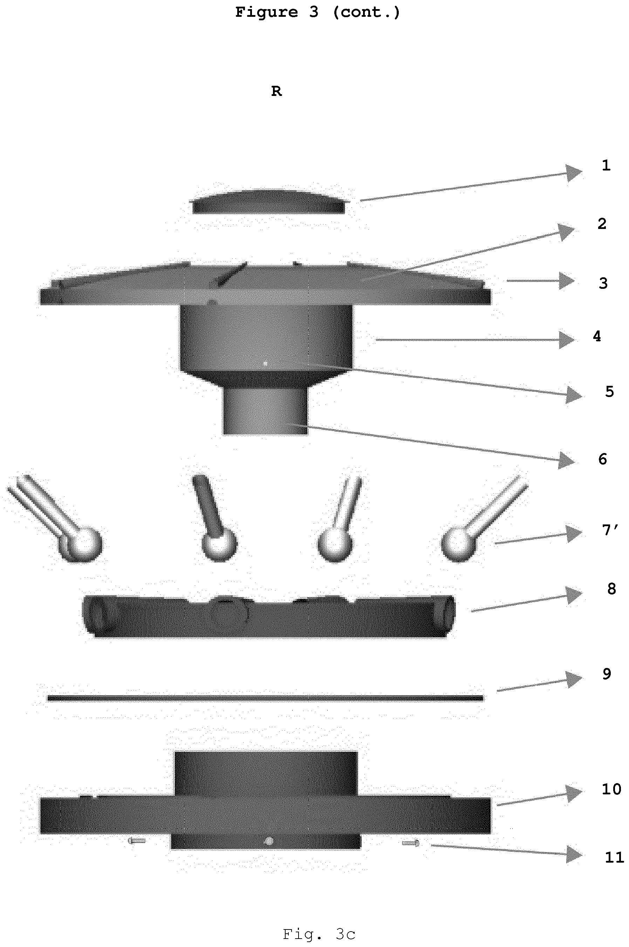

The present invention relates to a transportable shelter system (A), for one or more persons, easily mountable and dismountable. For this purpose, the tent (A) was designed having a spiral geometric shape such as that of a conch (Fig. 1), which comprises a rotatable mounting system (R) with semi-bearings, having a simple folding pole frame (7) insertion system (M) on the top of the tent (Fig.2 and 3).

The tent (A) of the present invention, further allows the collection, recovery and conversion of mist and environmental humidity into drinking water, and its storage, transport and safe ingestion, also in a phased manner, for example throughout the day, due to the use of a new fabrics (20) with hydrophilic and hydrophobic properties (Fig. 6 and 7) in the awning (T) of the shelter system (A).

The tent (A) further provides the possibility of mounting a small additional awning or flysheet (Z), positioned on the outer awning (T) and rotatable mounting housing system (R).

The awning (T) and flysheet (Z) may be made of conventional fabrics but when they coated with a film with hydrophobic properties it is possible to improve protection of the inside of the tent (A) in case of intense rainfall events (Fig.1). This film is preferably a polydimethylsiloxane polymer (PDMS) film.

Additionally, the tent (A) may comprise an inner awning (T') to improve weather insulation properties. When present, this awning is coupled with the outer awning (T).

The tent of the present invention may further exhibit an improved ground fastening system (E). This system may comprise stakes (13) attached to a pole tip (7) and to a ribbon (14) having preferably two holes (12a and 12b) as shown in Fig. 5.

Tent (A) may comprise, as optional accessories, a system for collecting mist or environmental humidity (H) with conversion into drinkable water and respective storage and transport. This system (H) preferably comprises materials or elements for cleaning and purifying the water thus obtained.

Tent (A) may optionally comprise a signalling and identification system.

The entire shelter system (A) is easy to assemble and disassemble and further wrapping that enables easy transportation by a single individual, for example inside a suitable transporting bag (Fig. 2a to 2d).

### 1. Transportable shelter system (A)

The tent (A) of the present invention has a spiral base geometry, such as that of a conch, comprising a rotatable mounting system (R) with simple engagement system (M) of the poles (7) at the top of the tent, which enables rapid assembly / disassembly and improves its structural stability, as shown in figure 2.

The base structure of the transportable shelter (A) or tent of the present invention is preferably composed of light and resistant materials with some flexibility, such as for example steel, plastic materials, for example PVC, polypropylene, polyester, polyethylene, nylon, etc. coated or not with aluminium or other materials to impart other properties such as mechanical and / or structural strength, glass fibre, carbon and / or composites.

The awnings (T and T') may comprise conventional natural or synthetic fabrics or mixtures thereof. The awning (T) may comprise a material having hydrophobic and hydrophilic properties (Figs. 6 and 7). The fabrics of the outer awnings, i.e. the awning (T) and / or flysheet or awning (Z) may further incorporate a film of temperature resistant material. Preferably, awning (T) comprises polyester, and can be aluminium coated, as temperature resistant material. Preferably, the floor sheet (B) of the tent comprises polyethylene.

To ensure improved structural stability, the tent (A) can be equipped with a system for securing the stakes (13) and poles (7) to the ground, as shown in Fig.5.

This system comprises fastening ribbons (14) coupled to the floor (B) of the tent, which in turn is coupled to the awning (T), and the ribbons (14) are connected to the seam zone between awning (T) and floor of the tent (B). The securing ribbons (14) comprise at least one hole (12), preferably two holes (12a) and (12b) of different dimensions for engaging each of the stakes (13) and each of the poles (7) of the set of poles (7) and respective stakes (13), wherein the poles (7) are fixed, in relation to the ribbons (14), by insertion of their tips into a shim (16), said shim being connected to the awning material (T) through an elastic band material (15).

In addition, due to the spiral geometry and the positioning of the entrance of the tent (A) good ventilation inside is provided, being the door system composed of two net screens: (i) one mosquito netting, and (ii) one in the upper awning material (T), having a locking system, ex. with a zipper, which can be closed and locked by a lock (Fig. 1).

For ease of assembly / disassembly, the tent (A) of the present invention comprises a rotatable mounting system (R) with a removable cover (1) on the top of the system housing, also with a cover (2) (Fig. 3), which enables the tent to be unrolled and rolled up for assembly and disassembly respectively.

The different components of the system (R) fit together under pressure and carry a reinforcement with fastening means (5 and 11) in the base, joining the central tubes of the two outer parts (Fig.3) .

The poles (7), with the coupled awning (T), fit into the holes of the semi-bearings of the rotatable mounting system (R). Preferably, the poles (7) and the coupled awning (T), may already be pre-fitted into the holes of the semi-bearings.

Preferably, the upper awning (T) is coupled to the poles (7) by a fabrics-guide engaging system, and the lower awning (T') is coupled to the upper awning (T) by a woven fabric strip system, connecting both awnings.

More preferably, on the top of the housing (2) formed by the rotatable mounting system (R) with removable cover (1), five pointers (3) are positioned in alignment with the semi-bearings to support the positioning guides (3) of the poles (7) (Fig. 3) .

When the tent (A) is disassembled, the poles (7) with semi-bearings ends are arranged side by side at one end of the housing (2). To assembly the tent, it is only necessary to simply rotate the rotatable mounting system (R) to the position indicated by the pointers (3), to tilt them slightly and then to push until they tuck into the inside of the housing (2), as shown in figure 3a. To disarm the poles (7), the sequence of movements is the inverse, as shown in figure 3b.

With the tent (A) laying on the floor and the poles (7) properly positioned, the assembly of the tent is made by the tension caused by the simple fixing of the stakes (13) to the ground, and the lower zones of the poles (7) to the existing fastening means (14) in the lower part of the tent, i.e. the tent floor (B), which is coupled to the inner awning (T'). In a preferred embodiment, these securing means (14) are nylon ribbons sewed to the floor of the tent (B).

In this way, due to the spiral geometry and the semi-bearing system (R), the assembly / disassembly of the tent (A) can be carried out very quickly and in only 4 steps:
a) Rotation of the poles (7), with the coupled awning (T and T') and floor (B), and positioning the upper end of the poles (7) in the concavities of the rotatable mounting system housing (2);
b) Stretching the outer awning (T) and aligning the lower ends of the poles (7) with the nylon ribbons (14) sewed to the floor of the tent (B). Engaging the rubber washer of the upper awning (T) to the upper edge of the rotatable mounting system housing (2) and place its cover (1);
c) Fixing the stakes (13) and the tensioners of elastic band material (15).

To disassembly the tent, the same process is used, but in the reverse order.

Depending on the dimensions implemented, the tent, preferably made of lightweight materials, can weigh from approximately 2 kg in size for one to two persons but tents with larger dimensions may be also implemented for a greater number of persons, such as 4, 6, 8, 10 or even 12 persons and so on.

### 2. Mist and humidity collecting system (H)

The tent of the present invention comprises a collection system of mist and environmental humidity that is able to convert it into drinking water. This system may also comprise a water cleaning and purification means. Therefore, the water thus obtained can be ingested immediately or transported and ingested later.

For this purpose, the tent (A) of the present invention comprises a system (H) including a tapered and removable part for collecting mist / environmental humidity, hereinafter referred to as a funnel (F), given its function, and a container (C) for collection and transport of the water, as shown in figure 1.

The funnel (F) is preferably produced in a durable and light material, such as for example silicone. This funnel (F) has a structured surface (20) with hydrophilic and hydrophobic properties that channels the water and converges it towards the centre of the shelter, inside which is placed a container with water purification system, as shown in the figure 6 and figure 7.

The design of the embossed structure of the funnel (F) is composed of "W" drainage section modules, in which upper and lower vertices are accentuated sharp cutting lines that run through the surface converging in the lower part of the part, as shown in figure 7. At the top of these lines, are located spaced protuberances with concave corrugated top having a contact angle with water of less than 90°, thus with hydrophilic properties. The "W" surface walls are inclined at 12°, and comprise a web of corrugated protuberances, alternately with a contact angle with water greater than 90°, thus with hydrophobic properties and less than 90°, thus with also hydrophilic properties.

This combination of structure of the funnel (F) inner surface allows, on the one hand, the condensation of the water due to the concave corrugated surfaces, and simultaneously it increases the efficiency of the process of flowing, by reducing the time of water contact with the surface of the funnel (through the convex corrugations) through the "W" section into the funnel channel.

When the funnel (F) is not assembled, it has the appearance of a planned circumference, as shown in figure 7, taking a cross-section from the outline shape to the centre.

There is a locking groove adjacent to the boundaries of one of the flanges that defines the cut, i.e. a projection in the anterior zone of the flap, which improves de efficiency of the embossed surface existing on the back surface of the funnel (F) .

To assembly the funnel (F), it is only necessary to overlap the two flaps in the desired position, press the fitting and place the part, totally or partially, on a concave surface. A thinner membrane can be positioned under the lower outer line to ensure the tightness of the joint, said membrane can be made of silicone.

By removing the cover (1) from the rotatable mounting system (R), the funnel (F) can then be placed in an adequate position and thus be connected to the upper awning (T) of the tent (A) having its central hole facing the water water-guiding (4), of the rotatable mounting system (R).

For disassembly and storage of the system (H), it is only necessary to disengage the fitting and wind the funnel (F) disassembled around the disassembled tent and accommodate the part in the inner zone of the package.

The outline of the funnel (F) is provided with attachment means to the top awning of the tent, such as 2 holes with metal eyelets having at least two elastic bands with metallic hook-shaped ends (rounded nozzle).

In case of heavy rain, the planned funnel (Fig. 7) placed on top of the tent acts as a waterproofing reinforcement.

The container (C) for receiving the water may preferably be a cantle or flask with an opening and closing system, for example in flexible PVC or other durable, resistant and light material. Said flask (C) is connected to the lower end of the region of the rotatable mounting system (R), and can be accessible through the interior of the tent, as shown in Figure 1.

This container (C) comprises at least one filter, preferably at least two filters, for example one located at the top of the water guiding tube (4), and the other at the base of said tube (4), wherein one of these filters is used to retain larger particles and the other is used to retain smaller particles thus preventing impurities from passing into the container or flask (C). Other filters may be provided in order to obtain water as clean as desired.

These filters may be made of any material that allows filtering, cleaning, particle removal and / or purifying water. Preferably, they are made of an anti-oxidant material, for example fine mesh of stainless steel, and may be removable for cleaning, replacement, repair, etc.

In a preferred embodiment of the invention, the container (C) is made of flexible PVC, which allows, on the one hand, its ergonomic adaptation to the body during transportation and, on the other hand, a better use of water insofar as its material can be squeezed.

The water container (C), being detachable from the system (H), can be carried separately through a common transport system, such as a handle or strap, which may be incorporated in the container.

### 3. Material with hydrophilic and hydrophobic structure

The micro-drained material of the present invention comprises a multi-channel hydrophilic and hydrophobic structure (20) having high reproducibility and accuracy characteristics, tear strength, excellent elastic memory and dimensional stability being preferably composed of organic polymers of silicon material.

A particularly preferred silicon polymer is polydimethylsiloxane or PDMS, due to its easiness of use as a seal resin in the smooth lithography procedure, thus allowing the transfer of a certain pattern of only a few nanometres in size on different surfaces.

The seal, produced from normal photolithography, screen printing or electron beam lithography, allows a great resolution of the design / texture application, depending on the mask used, which can reach 6 nm. The shear modulus of the PDMS varies with the preparation conditions, but is typically in the range of 100 kPa to 3 MPa.

The structural design of the embossed pattern to apply to the fabric has as hydrophobic reference the micro-filaments of a butterfly wing and the micro-protrusions of the Lotus leaf.

As a hydrophilic reference, there are the undulated micro-protrusions and the "V" drains, with an approximate angle of 12°, of the Namibian beetle; due to this combined structure design said animal has the capacity to transform the night mist of the desert into water.

Combining these three functions, namely hydrophilic, hydrophobic and channelling, the obtained design of the structure applied on the fabric is composed of "W" drainage section modules, in which upper and lower vertices present sharp parallel lines on its surface, having spaced protuberances of concave top with a contact angle with water less than 90° (hydrophilic) (Fig.6 and 7).

On the other hand, the surface walls, which have an inclination of approximately 12°, are in turn composed of a web of corrugated protuberances, alternately with a contact angle with water greater than 90° (hydrophobic) and less than 90° (hydrophilic).

The combination of these properties results in the condensation of the mist or moisture caused by the concave corrugations, and simultaneously increases the efficiency of the process of its flowing, by the reduction of the time of contact of the water with the surface (through the convex corrugations) through the "W" section to the lower ends of the inclined material.

When this type of hydrophilic and hydrophobic texture is applied to PDMS or on other materials, for example on the silicon of the funnel of the humidification system (H), results on a greater efficiency of capture and retention of water from mist or environmental humidity.

### 4. Identification and signalling system

The tent (A) of the present invention may further comprise, optionally, an individual or group identification system, as well as a signalling and geographic location system.

In terms of identification system, it is possible to use awnings of different colours for each tent or groups of tents. In this way, a group or an individual can be housed in tents of blue colour while others in the tents of red colour, etc.

When this colour system is used, it is easy to identify groups or individuals even by air, among others, for example in case it is necessary to send humanitarian assistance teams from air transport.

This type of system facilitates providing support and aid to displaced populations in areas that are difficult to access by land vehicles, and especially for internally displaced persons who are mostly located near conflict zones.

In another aspect, the tent of the present invention may further incorporate a signalling and geolocation system, for example, coupling a signal transmission system, such as a beacon, for transmitting Bluetooth radio signals combined or not with the emission of light-base signals and / or with GPS system.

## Claims

1. A transportable shelter system (A), having a spiral geometric shape, comprising an outer awning (T) and a rotatable mounting system (R), wherein:
- the outer awning (T) comprises a film of a material (20) with hydrophobic micro-drained structure and hydrophobic and hydrophilic properties,
- the rotatable mounting system (R) comprises a housing (1), a housing cover (2), guiding pointers (3), a central tube (4), a pole engaging system (M) having pole-engaging elements (8, 9) and a base (10),
the shelter system (A) further comprises:
- a pole-frame (7) comprising a plurality of foldable poles (7'), where each foldable pole (7') has a semi-bearing upper end to fit in the pole engaging system (M),
- an inner awning (T') and/or a flysheet (Z), said flysheet being positioned over the outer awning (T) and the rotatable mounting system (R),
- the outer awning (T) and/or the flysheet (Z) are made of a film of material (20) having hydrophobic and hydrophilic properties with a micro-drained structure having corrugated micro-protrusions and "V" drains, the surface of which has an approximate contact angle with water of 12° and forms a web of corrugated protrusions with a contact angle with water greater than 90°,
- the transportable shelter system (A) further comprises a mist and environmental humidity collecting system (H) that comprises a funnel element (F) having on its surface a film (20) of a micro-drained structured material having hydrophobic and hydrophilic properties, the funnel element (F) channels obtained water from mist and environmental humidity to a container (C), said container being attachable to the transportable shelter system (A) by coupling it to the rotatable mounting system (R),

2. A transportable shelter system (A) according to claim 1 further comprising a film of temperature resistant material.

3. A transportable shelter system (A) according to any of the claims 1 or 2 wherein the outer awning (T), the inner awning (T') and the pole-frame (7) are coupled.

4. A transportable shelter system (A) according to any of the claims 1 to 3 further comprising a fastener system (E) to anchor the shelter system (A) to the ground comprising:
- fastening ribbons (14) coupled to the ground (B) of the shelter system (A) and outer awning (T),
- said ribbons (14) having at least one hole (12), preferably two holes (12a and 12b) of different dimensions, for engaging a stake (13) together with one of the foldable poles (7') of the pole frame (7), wherein
- each foldable pole (7') is secured in respective to the corresponding ribbon (14) by engaging its lower end in a shim (16) that is attached to the outer awning (T) with elastic band material (15).

5. A transportable shelter system (A) according to claim 1, wherein the funnel element (F) comprises a surface coated with a film of a material (20) with hydrophobic micro-drained structure, and hydrophobic and hydrophilic properties, said surface having corrugated protuberances and drains with a "V" shape with surface walls presenting an angle of approximately 12°, and forms a web of corrugated protuberances, alternately with a contact angle with water greater than 90° and less than 90°.

6. A transportable shelter system (A) according to claim 5, wherein the film (20) is a polydimethylsiloxane polymer film, named PDMS.

7. A transportable shelter system (A) according to claim 1, comprising the container (C) and wherein the container (C) comprises a purifying water system with at least one filter, preferably with two filters.

8. A transportable shelter system (A) according to claim 7, wherein the container (C) material comprises a flexible PVC polymer and the filter comprises anti-oxidizing material.

9. A transportable shelter system (A) according to any of the previous claims comprising an individual or group identification system, and/or a signalling and geographic location system.

10. A transportable shelter system (A) according to claim 9 wherein the individual or group identification system comprises a colour code.

11. A transportable shelter system (A) according to claim 10, wherein the signalling and geographic location system comprises a signal transmission system that may be coupled with the emission of light-base signals and / or with GPS system.

## Patentansprüche

1. Transportables Unterschlupfsystem (A) mit einer spiralförmigen geometrischen Form, das ein äußeres Sonnensegel (T) und ein drehbares Montagesystem (R) umfasst, wobei:
- die äußere Sonnensegel (T) besteht aus einer Film aus einem Material (20) mit hydrophober mikroentwässerte Struktur und hydrophoben und hydrophilen Eigenschaften,
- das drehbare Montagesystem (R) besteht aus einem Gehäuse (1), einem Gehäusedeckel (2), Führungszeigern (3), einem Zentralrohr (4), einem Pfosteneinrast-system (M) mit Pfosteneinrast-elementen (8, 9) und einer Basis (10),
- einen Pfostengestells (7), der eine Vielzahl von faltbaren Pfosten (7') umfasst, wobei jede faltbare Pfosten (7') ein halb-gelagertes oberes Ende hat, das in das Pfosteneinrast-system (M) passt,
- eine innere Sonnensegel (T') und/oder ein Außenzelt (Z), wobei das Außenzelt über der äußeren Sonnensegel (T) und dem drehbaren Montagesystem (R) angeordnet ist,
- das äußere Sonnensegel (T) und/oder das Außenzelt (Z) bestehen aus einer Materialfilm (20) mit hydrophoben und hydrophilen Eigenschaften und einer mikroentwässerte Struktur mit gewellten Mikrovorsprüngen und "V"-Kanäle, deren Oberfläche einen Kontaktwinkel mit Wasser von ungefähr 12° hat und ein Netz aus gewellten Vorsprüngen mit einem Kontaktwinkel mit Wasser von mehr als 90° bildet,
- das transportable Unterschlupfsystem (A) ferner ein System (H) zum Auffangen von Nebel und Umgebungsfeuchtigkeit umfasst, das ein Trichterelement (F) umfasst, das auf seiner Oberfläche einen Film (20) aus einem mikroentwässert strukturierten Material mit hydrophoben und hydrophilen Eigenschaften aufweist, wobei das Trichterelement (F) das aus dem Nebel und der Umgebungsfeuchtigkeit gewonnene Wasser zu einem Behälter (C) leitet, wobei der Behälter an dem transportablen Unterschlupfsystem (A) angebracht werden kann, indem er mit dem drehbaren Montagesystem (R) gekoppelt wird.

2. Transportables Unterschlupfsystem (A) nach Anspruch 1, das außerdem eine Film aus temperaturbeständigem Material umfasst.

3. Transportables Unterschlupfsystem (A) nach einem der Ansprüche 1 oder 2, wobei das äußere Sonnensegel (T), das innere Sonnensegel (T') und das Pfostengestells (7) gekoppelt sind.

4. Transportables Unterschlupfsystem (A) nach einem der Ansprüche 1 bis 3, ferner umfassend ein Befestigungssystem (E), um das Unterschlupfsystem (A) am Boden zu verankern, umfassend:
- Befestigungsbänder (14), die mit dem Boden (B) des Zeltunterschlupfsystems (A) und der äußeren Sonnensegel (T) gekoppelt sind,
- die Bänder (14) mindestens ein Loch (12), vorzugsweise zwei Löcher (12a und 12b) mit unterschiedlichen Abmessungen, zum Einrasten eines Pfahls (13) zusammen mit einem der faltbaren Pfosten (7') des Pfostengestells (7) aufweisen, wobei
- jeder faltbare Pfosten (7') wird jeweils an dem entsprechenden Band (14) befestigt, indem sein unteres Ende in ein Keil (16) einrasten, das mit elastischem Bandmaterial (15) an der äußeren Sonnensegel (T) befestigt ist.

5. Transportables Unterschlupfsystem (A) nach Anspruch 1, wobei das Trichterelement (F) eine Oberfläche umfasst, die mit einem Film aus einem Material (20) mit hydrophober mikroentwässerte Struktur und hydrophoben und hydrophilen Eigenschaften beschichtet ist, wobei die Oberfläche gewellte Vorsprünge und Kanäle mit einer "V"-Form mit Oberflächenwänden aufweist, die einen Winkel von ungefähr 12° aufweisen, und ein Netz aus gewellten Vorsprüngen bildet, die abwechselnd einen Kontaktwinkel mit Wasser von mehr als 90° und weniger als 90° haben.

6. Transportables Unterschlupfsystem (A) nach Anspruch 5, wobei die Film (20) eine Polydimethylsiloxan-Polymerfilm, genannt PDMS, ist.

7. Transportables Unterschlupfsystem (A) nach Anspruch 1, umfassend dem Behälter (C) und wobei der Behälter (C) ein Wasserreinigungssystem mit mindestens einem Filter, vorzugsweise mit zwei Filtern, aufweist.

8. Transportables Unterschlupfsystem (A) nach Anspruch 7, wobei das Material des Behälters (C) besteht aus ein flexibles PVC-Polymer und der Filter antioxidierendes Material umfasst.

9. Transportables Unterschlupfsystem (A) nach einem der vorhergehenden Ansprüche, umfassend ein Einzel- oder Gruppenidentifikationssystem und/oder ein Signalisierungs- und geografisches Ortungssystem.

10. Transportables Unterschlupfsystem (A) nach Anspruch 9, wobei das Einzel- oder Gruppenidentifikationssystem einen Farbcode umfasst.

11. Transportables Unterschlupfsystem (A) nach Anspruch 10, wobei das Signalisierungs- und geografische Ortungssystem ein Signalübertragungssystem umfasst, das mit der Aussendung von Lichtsignalen und/oder mit einem GPS-System gekoppelt sein kann.

## Revendications

1. Système d'abri transportable (A), ayant une forme géométrique en spirale, comprenant un auvent extérieur (T) et un système de montage rotatif (R), dans lequel :
- l'auvent extérieur (T) comprend un film d'un matériau (20) avec une structure micro-drainée hydrophobe et des propriétés hydrophobes et hydrophiles,
- le système de montage rotatif (R) comprend une couverture (1), un couvercle de boîtier (2), des pointeurs de guidage (3), un tube central (4), un système d'engagement de poteaux (M) ayant des éléments d'engagement de poteaux (8, 9) et une base (10),
- un cadre de poteaux (7), comprenant une pluralité de poteaux pliables (7') où chaque poteau pliable (7') a une extrémité supérieure avec un demi-roulement pour s'insérer dans le système d'engagement de poteaux (M),
- un auvent intérieur (T') et/ou une bâche (Z), ladite bâche étant positionnée sur l'auvent extérieur (T) et le système de montage rotatif (R),
- l'auvent extérieur (T) et/ou la bâche (Z) sont constitués d'un film d'un matériau (20) ayant des propriétés hydrophobes et hydrophiles avec une structure micro-drainée ayant des microsaillies ondulées et des drains en forme de V, dont la surface présente un angle de contact avec l'eau d'environ 12° et forme un réseau de saillies ondulées présentant un angle de contact avec l'eau supérieur à 90°,
- le système d'abri transportable (A) comprend en outre un système de collecte de brouillard et d'humidité ambiante (H) qui comprend un élément entonnoir (F) ayant sur sa surface un film (20) d'un matériau avec une structure micro-drainée et des propriétés hydrophobes et hydrophiles, l'élément entonnoir (F) canalisant l'eau obtenue du brouillard et de l'humidité ambiante vers un récipient (C), ledit récipient pouvant être attaché au système d'abri transportable (A) par accouplement au système de montage rotatif (R).

2. Système d'abri transportable (A) selon la revendication 1 comprenant en outre un film d'un matériau résistant à la température.

3. Système d'abri transportable (A) selon l'une quelconque des revendications 1 ou 2 dans lequel l'auvent extérieur (T), l'auvent intérieur (T') et le cadre de poteaux (7) sont accouplés.

4. Système d'abri transportable (A) selon l'une quelconque des revendications 1 à 3 comprenant en outre un système de fixation (E) pour ancrer le système d'abri (A) au sol, constitué de :
- bandes de fixation (14) accouplées au sol (B) du système de tente d'abri (A) et à l'auvent extérieur (T),
- lesdites bandes (14) ayant au moins un orifice (12), de préférence deux orifices (12a and 12b) de dimensions différentes, pour l'engagement d'un piquet (13) avec l'un des poteaux pliables (7') du cadre de poteaux (7), où
- chaque poteau pliable (7') est fixé par rapport à la bande correspondante (14) par engagement de son extrémité inférieure dans une cale (16) qui est reliée à l'auvent extérieur (T) avec une bande en matériau élastique (15).

5. Système d'abri transportable (A) selon la revendication 1, dans lequel l'élément entonnoir (F) comprend une surface revêtue d'un film d'un matériau (20) avec une structure micro-drainée hydrophobe et des propriétés hydrophobes et hydrophiles, ladite surface ayant des saillies ondulées et des drains en forme de V, dont les parois de surface présentent un angle d'environ 12° et forment un réseau de saillies ondulées, avec alternativement un angle de contact avec l'eau supérieur à 90° et inférieur à 90°.

6. Système d'abri transportable (A) selon la revendication 5, dans lequel le film (20) est un film de polymère polydiméthylsiloxane, appelé PDMS.

7. Système d'abri transportable (A) selon la revendication 1 comprenant le récipient (C) et dans lequel le récipient (C) comprend un système de purification d'eau avec au moins un filtre, de préférence avec deux filtres.

8. Système d'abri transportable (A) selon la revendication 7, dans lequel le matériau du récipient (C) est constitué d'un polymère de PVC souple et le filtre est constitué d'un matériau anti-oxydant.

9. Système d'abri transportable (A) selon l'une quelconque des revendications précédentes comprenant un système d'identification individuelle ou de groupe, et/ou un système de signalisation et de localisation géographique.

10. Système d'abri transportable (A) selon la revendication 9, dans lequel le système d'identification individuelle ou de groupe comprend un code de couleur.

11. Système d'abri transportable (A) selon la revendication 10, dans lequel le système de signalisation et de localisation géographique comprend un système de transmission de signaux qui peut être combiné avec l'émission de signaux lumineux et/ou avec un système de GPS.
